Europäisches Patentamt

European Patent Office

Office européen des brevets

(11) Veröffentlichungsnummer : **0 183 940**
**B1**

(12) **EUROPÄISCHE PATENTSCHRIFT**

(45) Veröffentlichungstag der Patentschrift :
30.08.89

(51) Int. Cl.⁴ : **A 01 N 43/26** // (A01N43/26,
37:34)

(21) Anmeldenummer : 85112347.1

(22) Anmeldetag : 28.09.85

(54) Mikroorganismen tötende oder das Wachstum von Mikroorganismen hemmende Zusammensetzung und deren Verwendung.

(30) Priorität : 09.10.84 DE 3436989

(43) Veröffentlichungstag der Anmeldung :
11.06.86 Patentblatt 86/24

(45) Bekanntmachung des Hinweises auf die Patenterteilung : 30.08.89 Patentblatt 89/35

(84) Benannte Vertragsstaaten :
AT BE CH DE FR GB IT LI LU NL SE

(56) Entgegenhaltungen :
Keine Entgegenhaltungen

(73) Patentinhaber : Grace Service Chemicals GmbH
Kurpfalzring 104
D-6900 Heidelberg 1 (DE)

(72) Erfinder : Henkels, Wolf-Dieter, Dr.
Rosenstrasse 52
D-6803 Edingen-Neckarh. (DE)
Erfinder : Balzer, Marion, Dipl.-Ing.
Akazienstrasse 36
D-6923 Neckarbischofsheim (DE)

(74) Vertreter : UEXKÜLL & STOLBERG Patentanwälte
Beselerstrasse 4
D-2000 Hamburg 52 (DE)

**Beschreibung**

Die Erfindung betrifft eine Mikroorganismen tötende oder das Wachstum von Mikroorganismen zumindest hemmende Zusammensetzung sowie deren Verwendung.

Der Befall industrieller Materialien und Wassersysteme durch Mikroorganismen hat eine Vielzahl von Problemen zur Folge. Beispielsweise kommt es in dem Prozeßwasser bei der Papierherstellung sowie in Kühlwassersystemen zur Bildung eines Mikroorganismenschleims, der den Herstellungsprozeß stört bzw. die Kühlkapazität des Systems mindert. Ferner werden verschiedene industrielle Materialien, wie beispielsweise Schwerölschlämme, Schneidöle, Textilöle und dergleichen von Mikroorganismen befallen und auf diese Weise erhebliche Qualitätsverluste verursacht. Die gleichen Probleme treten bei der Herstellung und Bearbeitung von Lebensmitteln, beispielsweise bei der Herstellung von Zucker auf.

Aus der japanischen Offenlegungsschrift 52-14294 ist es bekannt, industrielle Wassersysteme, insbesondere das Prozeßwasser bei der Papierherstellung und Kühlwassersysteme, mit 4,5-Dichlor-1,2-dithiol-3-on (DDO) zu behandeln, um der durch Mikroorganismen verursachten Schleimbildung entgegenzuwirken.

Aus der DE-OS 30 24 911 ist es ferner bekannt, 4,5-Dichlor-1,2-dithiol-3-on in Kombination mit Halogenessigsäureestern zu verwenden. Die Kombination dieser Bestandteile führt zu einem synergistischen Effekt bei der Bekämpfung des Mikroorganismenwachstums in industriellen Wassersystemen und Materialien.

Die DE-OS 31 49 008 beschreibt ebenfalls mikrobizide Zusammensetzungen für die Behandlung industrieller Systeme. Die Zusammensetzungen enthalten 4,5-Dichlor-1,2-dithiol-3-on und ein Alkylen-bis-thiocyanat, wobei auch diese Bestandteile eine synergistische Wirksamkeit bei der Bekämpfung des Mikroorganismenwachstums entfalten.

Ferner ist aus der DE-OS 32 13 106 die synergistische Wirksamkeit von 4,5-Dichlor-1,2-dithiol-3-on und 1,2-Benzisothiazolin-3-on bekannt.

Die antimikrobielle Wirksamkeit von halogenierten Amiden wie Dibromnitrilopropionamid (DBNPA) ist ebenfalls bekannt, vgl. Wolff et al., « 2,2-Dibromo-3-Nitrilopropionamide, A Compound with Slimicidal Activity », Appl. Microbiology 24, 581 bis 584 (1972). Eine stabile wäßrige Zusammensetzung mit einem Gehalt an DBNPA als Wirkstoff ist in der US-PS 4 232 041 beschrieben.

DBNPA verfügt zwar über einen breites Wirkungsspektrum, muß jedoch in verhältnismäßig hohen Konzentrationen eingesetzt werden.

Es ist Aufgabe der Erfindung, ein mikrobizides Mittel zur Behandlung einer Vielzahl unterschiedlicher industrieller Materialien und Wassersysteme zu schaffen, das bei niedriger Wirkstoffkonzentration eine intensive Wirksamkeit entfaltet.

Zur Lösung der Aufgabe wird die Mikroorganismen tötende bzw. das Wachstum von Mikroorganismen hemmende Zusammensetzung gemäß Anspruch 1 vorgeschlagen.

Überraschenderweise zeigte es sich, daß bei Kombination von DDO mit DBNPA eine ausgeprägte synergistische Wirksamkeit der beiden Bestandteile bei der Bekämpfung der in industriellen Systemen Probleme verursachenden Mikroorganismen erhalten wird und gleichzeitig das antimikrobielle Wirkungsspektrum der Kombination gegenüber demjenigen der Einzelkomponenten erheblich erweitert ist.

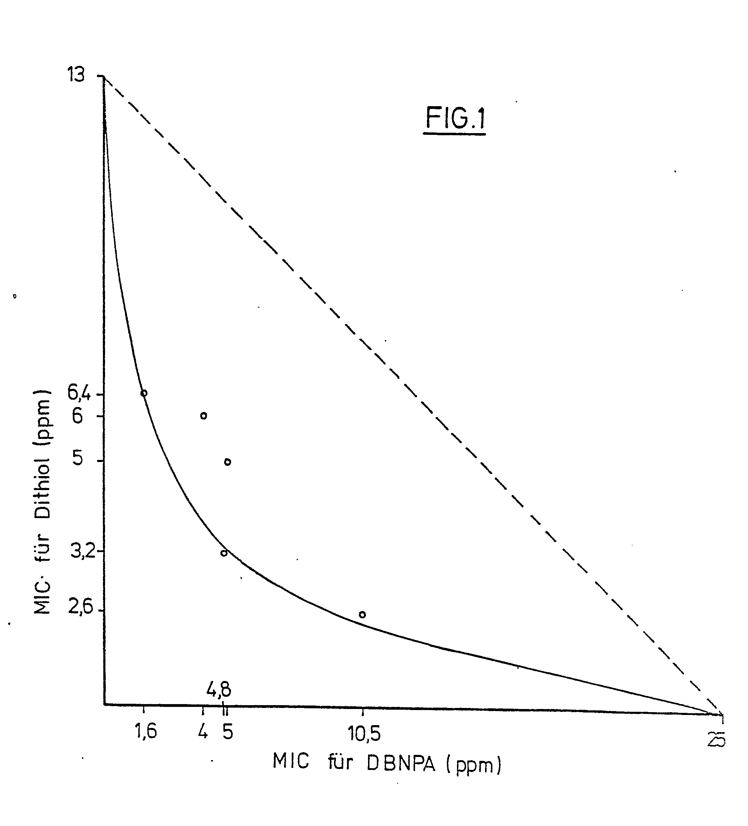

Der synergistische Effekt der beiden erfindungsgemäß kombinierten Wirkstoffe ist weitgehend unabhängig von dem jeweiligen Mischungsverhältnis. Es zeigte sich, daß dieser bei einem Gewichtsverhältnis von DDO zu DBNPA von 9 : 1 ebenso zum Ausdruck kommt wie bei einem umgekehrten Verhältnis (vgl. Figur 1). Vorzugsweise beträgt das Mischungsverhältnis von DDO zu DBNPA etwa 4 : 1 bis 1 : 4 Gewichtsteilen.

Die Zusammensetzung kommt als Flüssigkeit zur Anwendung und die Wirkstoffe können in dem flüssigen Träger gelöst oder dispergiert vorliegen.

Zum Lösen der Wirkstoffe kommen vorzugsweise hydrophile organische Lösungsmittel in Betracht, die lagerfähige, stabile Zusammensetzungen ergeben. Beispiele für derartige Lösungsmittel sind Amide wie Dimethylformamid, Glykole wie Ethylenglykol, Propylenglykol, Butylglykol, Diethylenglykol, Dipropylenglykol, Glykolether wie Diethylenglykolmonomethylether oder Ethylenglykolbutylether. Es können auch Mischungen aus zwei oder mehreren der in Betracht kommenden Lösungsmittel verwendet werden.

Die hydrophilen organischen Lösungsmittel können in der erfindungsgemäßen Zusammensetzung ganz oder teilweise durch Wasser ersetzt sein. In diesem Falle liegen die Wirkstoffe in Dispersion vor und die Zusammensetzung wird durch Zugeben von Stabilisatoren, sowie Dispergier- und/oder Emulgiermitteln stabilisiert.

Das Zugeben eines Dispergiermittels ist ferner dann erforderlich, wenn die erfindungsgemäße Zusammensetzung zur Behandlung wäßriger Systeme vorgesehen ist, um die Verteilung der Zusammensetzung in dem System zu erleichtern und zu verbessern.

Bevorzugte Dispergiermittel sind kationische, anionische, nicht-ionische oder amphotere oberflächenaktive Mittel, wobei die nicht-ionischen und anionischen besonders bevorzugt sind. Beispiele für geeignete nicht-ionische Mittel sind höhere Alkohol-Ethylenoxid(EO)-Addukte, Alkylphenol-EO-Addukte, Propylenoxid-EO-Addukte sowie Polyglykolether und/oder -ester. Beispiele für anionische oberflächenaktive Mittel sind Alkylbenzolsulfonate, sekundäre Alkansulfonate, Olefinsulfonate, Fettalkoholsulfate und

2

Fettalkoholethersulfate.

Gemäß einer bevorzugten Ausführungsform wird die erfindungsgemäße Zusammensetzung hergestellt, indem man die Wirkstoffe in einem hydrophilen organischen Lösungsmittel löst und unter Rühren das gewünschte Dispergiermittel zugibt, bis eine homogene Lösung erhalten wird.

Alternativ können die Wirkstoffe in einer Mischung aus einem hydrophilen organischen Lösungsmittel und Wasser oder in Wasser allein dispergiert werden und die Zusammensetzung durch Zugeben eines Dispergiermittels sowie bekannter Stabilisatoren stabilisiert werden.

Die Gesamtmenge der Wirkstoffmischung in der fertigen Zusammensetzung beträgt vorzugsweise etwa 5 bis 25 Gew.%, doch sind Gehalte bis zu etwa 50 Gew.% möglich.

Die erfindungsgemäße Zusammensetzung ist in den unterschiedlichsten industriellen Bereichen anwendbar. Sie eignet sich in gleicher Weise zur Kühlwasserbehandlung wie zur Wasserbehandlung in der Papierindustrie. Ferner kann sie als Konservierungsmittel beispielsweise in wäßrigen Dispersionen, Ölschlämmen, Schneidöler, Farben und dergleichen dienen.

Die erfindungsgemäße Zusammensetzung ist insbesondere auch zur Verwendung bei der Zuckerherstellung geeignet, wo die Gefahr einer Kontamination vor allem bei der Extraktion der Rübenschnitzel im Diffusionsturm besteht. Die erfindungsgemäßen Mittel können dem Extraktionswasser zugesetzt werden, um die vorhandenen Mikroorganismen abzutöten.

Die für die Behandlung erforderlichen Wirkstoffmengen sind abhängig von dem vorgesehenen Anwendungszweck. Gewöhnlich wird die erfindungsgemäße Zusammensetzung dem zu behandelnden System in Mengen von etwa 2 bis 400 ppm zugegeben. Im Papierkreislaufwasser reicht im allgemeinen eine Dosis von 2 bis 20 ppm aus. In wäßrigen Dispersionen können insbesondere bei höheren Keimzahlen Konzentrationen von 100 bis 300 ppm und höher erforderlich sein.

Die Erfindung wird nachfolgend anhand von Beispielen erläutert.

## Beispiel 1

Der erfindungsgemäße synergistische Effekt wurde nach dem Verfahren von F.C. Kull, P.C. Eismann, F.D. Sylvestrowicz und R.L. Mayer, Applied Microbiology 9, 538 bis 541 (1961) nachgewiesen. Als Testorganismus wurde Escherichia coli verwendet.

a) Die Bakterienkultur wurde unter den Bedingungen gemäß Merkblatt 44 der Merkblätter für die Prüfung von Packmitteln (herausgegeben von den Arbeitsgruppen der Industrievereinigung für Lebensmitteltechnologie und Verpackung e. V. am Frauenhofer-Institut für Lebensmitteltechnologie und Verpackung, Institut an der Technischen Universität München) angezogen.

b) Es wurde eine zweidimensionale Verdünnungsreihe hergestellt; die Wirkstoffkomponenten waren in der jeweiligen Verdünnungsstufe in den in Tabelle 1 angegebenen Gewichtsverhältnissen enthalten.

Für jede Verdünnungsstufe wurde die minimale Hemmkonzentration (MIC) mit dem Agar-Suspensionstest ermittelt.

c) Die Ergebnisse sind in Tabelle 1 wiedergegeben, wobei $Q_a$ und $Q_b$ die minimale Hemmkonzentration in ppm von DDO bzw. DBNPA sind, wenn diese jeweils allein eingesetzt werden, während $Q_A$ und $Q_B$ den Gewichtsanteil des jeweiligen Wirkstoffes in der entsprechenden, die minimale Hemmkonzentration der Mischung enthaltenden Verdünnungsstufe angeben.

## Tabelle 1

| Gew. Verh. A:B | $Q_a$ | $Q_A$ ppm | $Q_b$ | $Q_B$ | Mischung | $\dfrac{Q_A}{Q_a}$ | $\dfrac{Q_B}{Q_b}$ | $\dfrac{Q_A}{Q_a} + \dfrac{Q_B}{Q_b}$ |
|---|---|---|---|---|---|---|---|---|
| 100/0 | 13 | – | – | – | – | – | – | – |
| 80/20 | – | 6,4 | – | 1,6 | 8 | 0,49 | 0,06 | 0,55 |
| 60/40 | – | 6,0 | – | 4,0 | 10 | 0,46 | 0,16 | 0,62 |
| 50/50 | – | 5,0 | – | 5,0 | 10 | 0,38 | 0,20 | 0,58 |
| 40/60 | – | 3,2 | – | 4,8 | 8 | 0,25 | 0,19 | 0,44 |
| 20/80 | – | 2,6 | – | 10,4 | 13 | 0,20 | 0,42 | 0,62 |
| 0/100 | – | – | 25 | – | – | – | – | – |

Nach dem oben bezeichneten Verfahren liegt ein synergistischer Effekt dann vor, wenn

$$Q_A/Q_a + Q_B/Q_b < 1 \text{ ist.}$$

Wie aus den Werten in Tabelle 1 hervorgeht, führt jedes der gewählten Mischungsverhältnisse zu einem synergistischen Effekt.

d) Zur besseren Verdeutlichung wurden die in Tabelle 1 wiedergegebenen Ergebnisse in Figur 1 graphisch dargestellt.

Bei dieser Darstellungsweise würden bei einem additiven Effekt der Wirkstoffe die Werte auf der Geraden zwischen den jeweiligen minimalen Hemmkonzentrationen der einzelnen Wirkstoffe liegen. Der Grad der Abweichung der Kurve von der Geraden nach unten ist ein Maß für den synergistischen Effekt der Wirkstoffe in dem jeweiligen Mischungsverhältnis.

Wie Figur 1 zeigt, wird in der vorliegenden Versuchsanordnung der maximale synergistische Effekt bei einem Gewichtsverhältnis von DDO zu DBNPA von 40 : 60 erhalten.

Beispiel 2

Das Verfahren des Beispiels 1 wurde wiederholt mit dem Unterschied, daß als Testorganismus Aspergillus niger verwendet wurde.

Die Pilzkultur wurde gemäß Merkblatt 43 der Merkblätter für die Prüfung von Packmitteln (a.a.O.) angezogen. Die Ergebnisse sind in der nachfolgenden Tabelle 2 wiedergegeben.

Tabelle 2

| Gew. Verh. A:B | $Q_a$ ppm | $Q_A$ | $Q_b$ | $Q_B$ | Mischung | $\dfrac{Q_A}{Q_a}$ | $\dfrac{Q_B}{Q_b}$ | $\dfrac{Q_A}{Q_a}+\dfrac{Q_B}{Q_b}$ |
|---|---|---|---|---|---|---|---|---|
| 100/0 | 6 | - | - | - | - | - | - | - |
| 80/20 | - | 3,2 | - | 0,8 | 4 | 0,533 | 0,04 | 0,5733 |
| 60/40 | - | 2,1 | - | 1,4 | 3,5 | 0,35 | 0,07 | 0,42 |
| 50/50 | - | 1,75 | - | 1,75 | 3,5 | 0,292 | 0,0875 | 0,3795 |
| 40/60 | - | 1,4 | - | 2,1 | 3,5 | 0,233 | 0,105 | 0,338 |
| 20/80 | - | 0,7 | - | 2,8 | 3,5 | 0,117 | 0,14 | 0,257 |
| 0/100 | - | - | 20 | - | - | - | - | - |

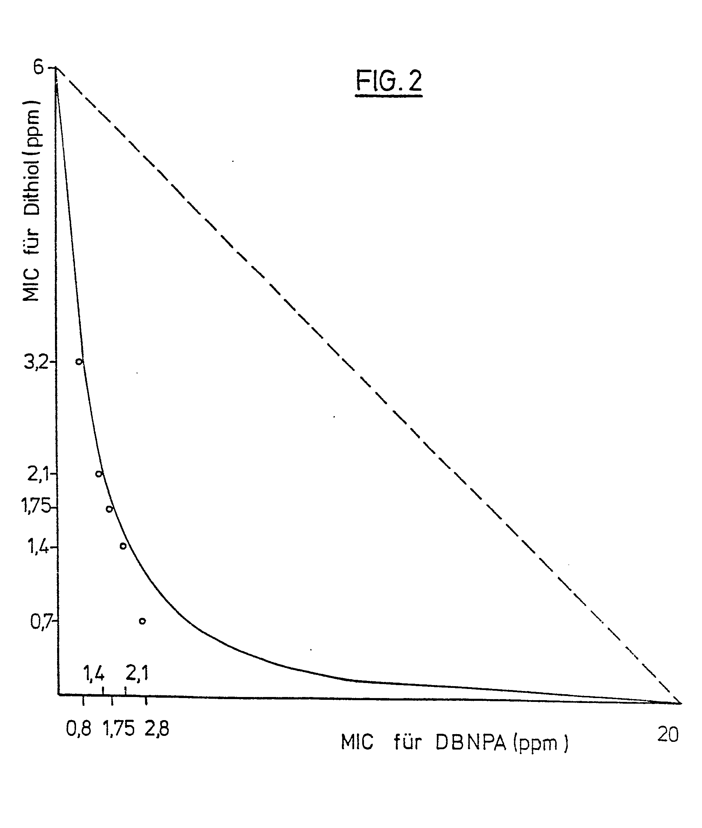

Die Ergebnisse gemäß Tabelle 2 sind in Figur 2 graphisch dargestellt. Es zeigt sich, daß der erfindungsgemäße synergistische Effekt auch gegenüber einer Kultur des Pilzes Aspergillus niger eintritt.

Beispiel 3

Das Verfahren des Beispiels 1 wurde wiederholt mit dem Unterschied, daß eine aus dem Prozeßwasser der Papierherstellung isolierte Mikroorganismen-Mischkultur verwendet wurde.

Die Ergebnisse werden in der nachfolgenden Tabelle 3 wiedergegeben.

Tabelle 3

| Gew. Verh. A:B | $Q_a$ ppm | $Q_A$ | $Q_b$ | $Q_B$ | Mischung | $\dfrac{Q_A}{Q_a}$ | $\dfrac{Q_B}{Q_b}$ | $\dfrac{Q_A}{Q_a}+\dfrac{Q_B}{Q_b}$ |
|---|---|---|---|---|---|---|---|---|
| 100/0 | 12,5 | - | - | - | - | - | - | - |
| 80/20 | - | 2 | - | 8 | 10 | 0,16 | 0,133 | 0,293 |
| 60/40 | - | 5 | - | 7,5 | 12,5 | 0,4 | 0,125 | 0,525 |
| 50/50 | - | 5 | - | 5 | 10 | 0,4 | 0,083 | 0,483 |
| 40/60 | - | 7,5 | - | 5 | 12,5 | 0,6 | 0,083 | 0,683 |
| 20/80 | - | 12 | - | 3 | 15 | 0,96 | 0,05 | 1,01 |
| 0/100 | - | - | 60 | - | - | - | - | - |

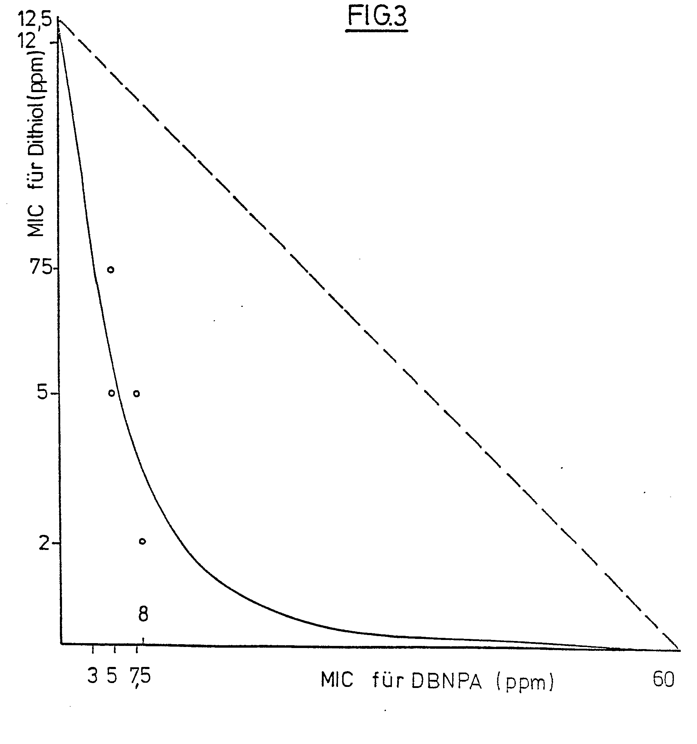

Die Ergebnisse gemäß Tabelle 3 sind in Figur 3 graphisch dargestellt. Die Ergebnisse zeigen den ausgeprägten synergistischen Effekt der Wirkstoffe DDO und DBNPA gegenüber dem breiten Spektrum von Mikroorganismen, wie es in dem Prozeßwasser der Papierherstellung als einem typischen industriellen System vorhanden ist.

**Patentansprüche**

1. Das Wachstum von Mikroorganismen hemmende oder Mikroorganismen tötende Zusammensetzung zur industriellen Anwendung, dadurch gekennzeichnet, daß sie eine Mischung aus 4,5-Dichlor-1,2-dithiol-3-on (DDO) und Dibromnitrilopropionamid (DBNPA) enthält.

2. Zusammensetzung nach Anspruch 1, dadurch gekennzeichnet, daß das Gewichtsverhältnis von DDO zu DBNPA in der Mischung 9 : 1 bis 1 : 9 beträgt.

3. Zusammensetzung nach Anspruch 2, dadurch gekennzeichnet, daß das Gewichtsverhältnis von DDO zu DBNPA 4 : 1 bis 1 : 4 beträgt.

4. Zusammensetzung nach einem der Ansprüche 1 bis 4, dadurch gekennzeichnet, daß sie die Mischung aus DDO und DBNPA gelöst in einem organischen Lösungsmittel enthält.

5. Zusammensetzung nach einem der Ansprüche 1 bis 4, dadurch gekennzeichnet, daß sie die Mischung aus DDO und DBNPA dispergiert in einem flüssigen Träger aus einem organischen Lösungsmittel und/oder Wasser mit einem Gehalt an üblichen Dispergiermitteln, Emulgatoren und/oder Stabilisatoren enthält.

6. Zusammensetzung nach einem der Ansprüche 1 bis 5, dadurch gekennzeichnet, daß die Gesamtmenge der Wirkstoffmischung in der Zusammensetzung 5 bis 25 Gew.% beträgt.

7. Verwendung einer Zusammensetzung nach den Ansprüchen 1 bis 6 zum Hemmen des Wachstums von Mikroorganismen oder zum Töten von Mikroorganismen in industriellen Materialien und Wassersystemen.

8. Verwendung einer Zusammensetzung nach den Ansprüchen 1 bis 6 im Zuckerherstellungsprozeß.

**Claims**

1. Composition for industrial use which inhibits the growth of microorganisms or kills microorganisms, characterized in that it contains a mixture of 4,5-dichloro-1,2-dithiol-3-one (DDO) and dibromonitrilopropionamide (DBNPA).

2. Composition according to Claim 1, characterized in that the DDO : DBNPA weight ratio in the mixture is 9 : 1 to 1 : 9.

3. Composition according to Claim 2, characterized in that the DDO : DBNPA weight ratio is 4 : 1 to 1 : 4.

4. Composition according to one of Claims 1 to 4, characterized in that it contains the mixture of DDO and DBNPA dissolved in an organic solvent.

5. Composition according to one of Claims 1 to 4, characterized in that it contains the mixture of DDO and DBNPA dispersed in a liquid carrier comprising an organic solvent and/or water containing customary dispersants, emulsifiers and/or stabilisers.

6. Composition according to one of Claims 1 to 5, characterized in that the total amount of the active compound mixture in the composition is 5 to 25 % by weight.

7. Use of a composition according to Claims 1 to 6 for inhibiting the growth of microorganisms or for killing microorganisms in industrial materials and water systems.

8. Use of a composition according to Claims 1 to 6 in the sugar manufacturing process.

**Revendications**

1. Composition inhibant la croissance des micro-organismes ou tuant les micro-organismes pour une utilisation industrielle, caractérisée en ce qu'elle contient un mélange de 4,5-dichloro-1,2-dithiol-3-one (DDO) et de dibromonitrilopropionamide (DBNPA).

2. Composition selon la revendication 1, caractérisée en ce que le rapport pondéral de DDO à DBNPA dans le mélange est de 9 : 1 à 1 : 9.

3. Composition selon la revendication 2, caractérisée en ce que le rapport pondéral de DDO à DBNPA est de 4 : 1 à 1 : 4.

4. Composition selon l'une des revendications 1 à 4, caractérisée en ce qu'elle contient le mélange de DDO et de DBNPA dissous dans un solvant organique.

5. Composition selon l'une des revendications 1 à 4, caractérisée en ce qu'elle contient le mélange de DDO et de DBNPA dispersé dans un support liquide constitué par un solvant organique et/ou de l'eau avec une teneur en dispersants, émulsifiants et/ou stabilisants habituels.

6. Composition selon l'une des revendications 1 à 5, caractérisée en ce que la quantité totale du mélange de substances actives dans la composition est de 5 à 25 % en poids.

7. Utilisation d'une composition selon les revendications 1 à 6 pour inhiber la croissance des micro-organismes ou pour tuer les micro-organismes dans des matériaux et des systèmes aqueux industriels.

8. Utilisation d'une composition selon les revendications 1 à 6 dans le processus de fabrication du sucre.

FIG.1

FIG. 2

FIG.3